**Europäisches Patentamt**

**European Patent Office**

**Office européen des brevets**

(11) Numéro de publication : **0 360 650 B1**

(12)

# FASCICULE DE BREVET EUROPEEN

(45) Date de publication du fascicule du brevet :
**18.03.92 Bulletin 92/12**

(51) Int. Cl.$^5$ : **F16D 23/14**

(21) Numéro de dépôt : **89402401.7**

(22) Date de dépôt : **04.09.89**

(54) **Butée de débrayage, notamment pour véhicules automobiles.**

(30) Priorité : **23.09.88 FR 8812437**

(43) Date de publication de la demande :
**28.03.90 Bulletin 90/13**

(45) Mention de la délivrance du brevet :
**18.03.92 Bulletin 92/12**

(84) Etats contractants désignés :
**DE FR IT**

(56) Documents cités :
**FR-A- 2 304 828**
**FR-A- 2 337 281**

(73) Titulaire : **VALEO**
**43, rue Bayen**
**F-75848 Paris Cédex 17 (FR)**

(72) Inventeur : **Gay, Christian**
**8, rue de Prague**
**F-80090 Amiens (FR)**
Inventeur : **Lassiaz, Philippe**
**18 rue d'Alsace**
**F-92300 Levallois (FR)**

(74) Mandataire : **Gamonal, Didier**
**Société VALEO Service Propriété Industrielle**
**30, rue Blanqui**
**F-93406 Saint Ouen (FR)**

EP 0 360 650 B1

## Description

La présente invention concerne d'une manière générale les butées de débrayage, notamment pour véhicule automobile, du genre comportant un élément d'attaque, un élément de manoeuvre, un capot et des moyens d'assemblage, pour assujettir le capot à l'élément de manoeuvre, selon le préambule de la revendication 1.

Une telle butée est décrite dans le document US-A-4 529 075. Dans celui-ci l'élément d'attaque, sous la sollicitation de moyens élastiques contrebutés par le flasque de l'élément de manoeuvre, est en appui contre un épaulement d'un capot rigide. Les moyens d'assemblage permettent un assemblage de l'élément d'attaque avec l'élément de manoeuvre et comportent des pattes élastiquement déformables radialement, appartenant à l'élément de manoeuvre, lesdites pattes étant crochetées sur des crans appartenant au capot et étant maintenues en prise avec lesdits crans par l'intermédiaire dudit organe élastique. Dans les figures 10 à 12 les crans sont formés à la faveur de pattes issues de la paroi latérale du capot.

En service, sous l'effet notamment des vibrations du véhicule et des chocs, il se peut, que du fait de l'élasticité des pattes, celles-ci échappent aux crans du capot en provoquant un désassemblage de l'ensemble.

En outre, dans certains cas, il est nécessaire d'amincir les pattes pour que celles-ci aient une bonne souplesse pour faciliter l'opération d'encliquetage, ce qui complique la fabrication.

De plus, cette disposition n'est pas d'un emploi universel, car elle est difficilement applicable, lorsque l'élément de manoeuvre est doté d'un flasque transversal dépourvu de toute paroi latérale.

Enfin, certaines solutions affaiblissent le capot.

La présente invention a pour objet de créer de nouveaux moyens d'assemblage entre le capot et l'élément de manoeuvre permettant d'éviter de manière simple et économique les inconvénients précités, tout en permettant un verrouillage effectif de l'ensemble sans affaiblir outre mesure le capot et en procurant d'autres avantages.

La solution de ce problème réside, conformément à l'invention, dans la partie caractéristique de la revendication 1.

Grâce à l'invention, le capot n'est pas affaibli outre mesure et la disposition est d'un emploi universel, les logements creux pouvant être obtenus facilement par moulage, ou par emboutissage selon la nature du flasque de l'élément de manoeuvre.

On appréciera également que le flasque de l'élément de manoeuvre n'est pas affaibli outre mesure.

Certes, on aurait pu songer à adopter une disposition du type de celle des figures 15 et 16 du document US-A-4 144 957, mais cela nécessite de pratiquer des ouvertures de grande étendue circonférentielle réduisant la résistance du capot.

En outre, une interférence peut avoir lieu entre les ergots, qui doivent en pratique être conformés pour une bonne coopération avec le capot, et l'organe de commande.

Cette disposition est difficile à mettre en oeuvre lorsque l'organe de commande a une forme annulaire.

La disposition selon l'invention ne présente pas ces désavantages et est d'un emploi universel, l'organe de commande pouvant être de quelconque nature et l'élément de manoeuvre être doté d'un flasque pourvu ou non à sa périphérie externe d'un rebord axial.

Suivant une disposition avantageuse les pattes consistent en des ergots radiaux.

Grace à cette disposition un bon contact peut être obtenu entre les pattes et leur logement creux associés ce qui favorise un bon maintien des moyens d'assemblage.

Les caractéristiques et avantages de l'invention ressortiront de la description qui va suivre en regard des dessins schématiques annexés sur lesquels :

    – la figure 1 est une vue en coupe axiale d'une butée de débrayage du type "tirée", suivant l'invention, représentée en place sur le dispositif débrayeur d'un embrayage.

    – la figure 2 est une vue en perspective éclatée d'une butée de débrayage selon la figure 1.

    – la figure 3 est une vue en coupe axiale d'une butée de débrayage du type "poussée" suivant une variante de réalisation de l'invention, représentée en place sur le dispositif débrayeur partiellement représenté.

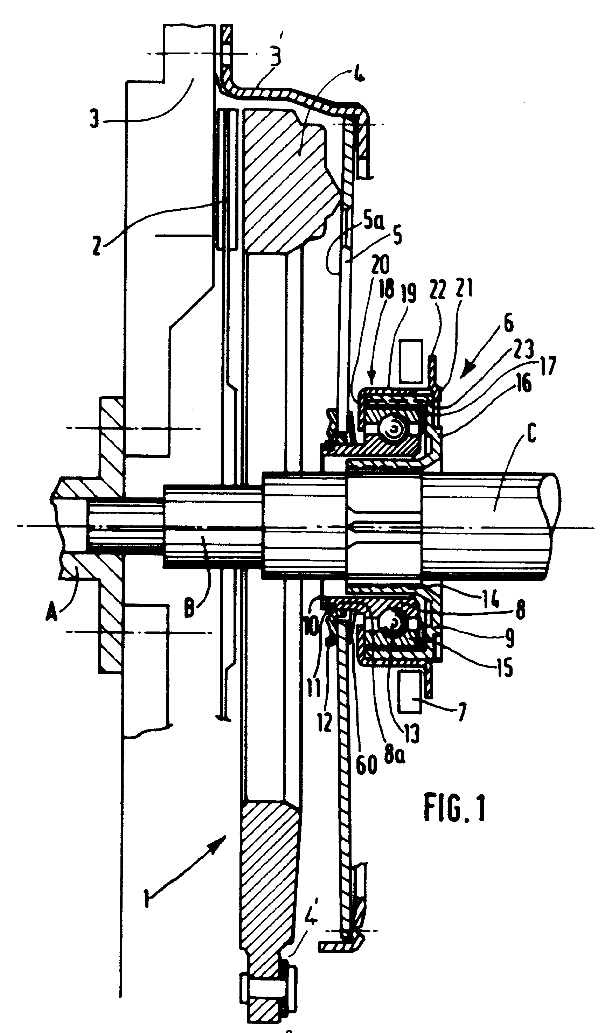

En se referant plus particulièrement à la figure 1, on a représenté un dispositif d'embrayage 1 disposé entre l'extrémité A du vilebrequin d'un moteur à combustion interne et l'arbre d'entrée B d'une boîte de vitesse à accoupler en rotation avec le moteur par l'intermédiaire d'un disque de friction 2, solidaire en rotation de l'arbre d'entrée B de la boîte de vitesses et susceptible d'être amené en contact avec un plateau de réaction 3, solidaire en rotation du moteur, sous la poussée d'un plateau de pression 4 sollicité axialement par un organe élastique de manoeuvre 5, ici un diaphragme, lui même actionné dans sa région centrale fragmentée en doigts radiaux par une butée de débrayage 6 mobile le long d'une trompette C coaxiale à l'arbre B sous l'influence d'un organe de commande 7, ici une fourchette de débrayage.

On notera que les extrémités des doigts du diaphragme 5 constituent le dispositif débrayeur de l'embrayage et que ledit diaphragme prend appui à sa périphérie externe sur un couvercle 3′ et à la périphérie interne de la rondelle Belleville, qu'il présente, sur le plateau de pression 4. Ce plateau 4 est lié en rotation au couvercle 3′ avec possibilité de déplacement axial par l'intermédiaire de languettes tangentielles 4′. Le couvercle 3′ est rapporté sur le plateau de réaction 3 par des vis non visibles, à la faveur d'un rebord radial qu'il présente à sa périphérie externe.

Lorsque l'embrayage est engagé le disque 2 est pincé entre les plateaux 3 et 4.

La butée de débrayage 6 comporte un élément d'attaque 8, par lequel elle agit sur le dispositif débrayeur de l'embrayage (les doigts du diaphragme 5), et un élément de manoeuvre 9 par lequel elle est adaptée à être déplacée par l'organe de commande 7.

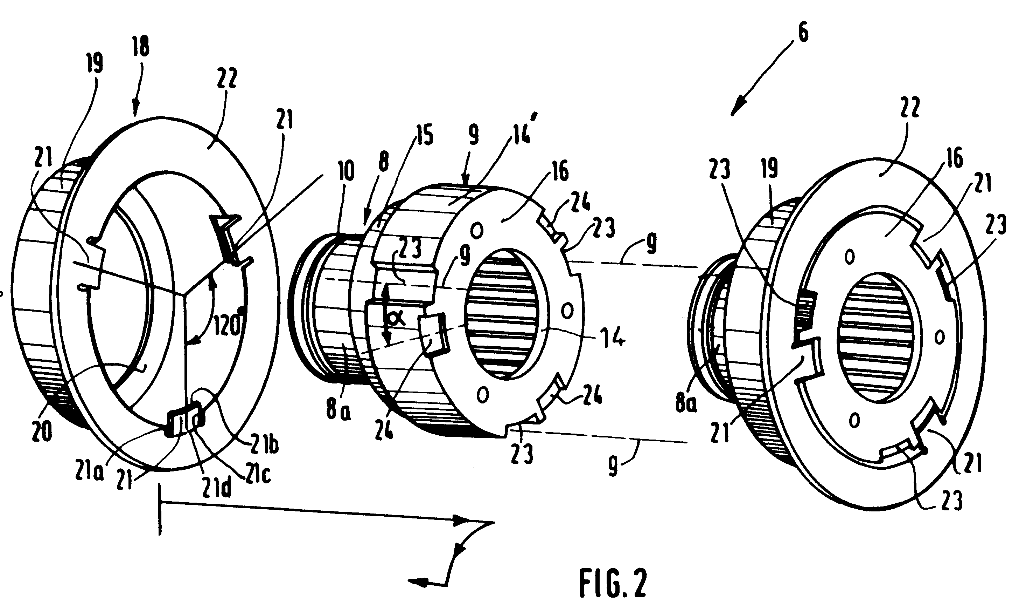

Dans les figures 1 et 2 la butée de débrayage 6 est destinée à agir en traction pour désengager l'embrayage et libérer le disque 2. A cet effet, l'élément d'attaque 8, sous forme de roulement à billes, est doté d'une bague intérieure tournante 13, dont l'extrémité libre 8a traverse le diaphragme 5 et est suffisamment prolongée pour permettre l'aménagement d'une gorge annulaire 10. Dans cette gorge est logé un jonc 11 pour la liaison de la bague 13, au moins dans le sens axial allant de l'embrayage à la butée de débrayage, à une pièce d'accostage 12 elle-même attelée au diaphragme 5. Cette pièce 12 porte sur la face 5a du diaphragme tournée à l'opposé de la butée 6. Une rondelle Belleville 60 prend appui sur la bague 8 et le diaphragme pour maintenir la pièce 12 constamment en appui sur le diaphragme.

L'élément de manoeuvre 9 comporte un manchon axial 14 par lequel la butée 6 est adaptée à être engagée et déplacée à coulissement sur la trompette C.

Pour appui axial de la bague externe 15 du roulement 8, l'élément 9 comporte transversalement un flasque 16 solidaire du manchon 14, ici obtenu avec lui par moulage de matière plastique, ledit flasque présentant une surépaisseur à sa périphérie externe pour appui d'un organe élastique 17.

Le flasque 16 est disposé à l'extrémité du manchon 14 la plus éloignée de la pièce d'accostage 12 et ledit flasque tranversal 16 est pourvu à sa périphérie externe d'un retour 14′ annulaire d'orientation axiale, en sorte que ledit élément de manoeuvre 9 a en section globalement la forme d'un U.

S'agissant, en outre d'une butée auto-centreuse, cet appui axial de la bague 15 se fait par l'intermédiaire de l'organe élastique à action axiale 17, ici sous forme de rondelle ondulée, contrebuté par le flasque 16.

Pour le maintien de l'ensemble qui le renferme, l'élément d'attaque 8 est attelé axialement à l'élément de manoeuvre 9 par l'intermédiaire d'un capot 18, ici rigide et métallique, comportant une paroi latérale annulaire 19 qui s'étend axialement, et un rebord radial 20, formant épaulement, dirigé vers l'intérieur du capot et contre lequel porte la bague externe 15 pour la retenue axiale de ce dernier du côté du diaphragme 5, l'organe élastique 17 et ladite bague 15 étant ainsi confinés axialement entre ledit flasque 16 et ledit épaulement ou rebord 20.

L'assemblage définitif de l'ensemble ainsi constitué s'effectuant à là partie opposée libre par des moyens assujettissant ledit capot 18, par sa paroi annulaire 19, au flasque 16.

Ces moyens, objet de l'invention, comportent des pattes 21, issues de la paroi latérale du capot 18, et faisant saillie vers l'intérieur de ladite paroi 19.

Ces pattes, ici au nombre de trois en étant réparties régulièrement circulairement, sont de contour rectangulaire en formant des ergots et obtenues par découpe et tranchage de trois côtés 21a, 21b et 21c et par pliage ensuite autour d'une ligne correspondant au quatrième côté fictif 21d du rectangle définissant les pattes 21, ce pliage s'effectuant selon un angle sensiblement perpendiculaire de manière à ce que ces pattes 21 soient dirigées radialement vers l'axe longitudinal du capot 18, donc vers l'intérieur de ce dernier à proximité de son extrémité libre opposée au rebord radial 20 et en formant entre elles un angle de 120°.

Selon une caractéristique de l'invention, la ligne de pliage des pattes 21 passant par le coté fictif 21d du rectangle est située sur le plan d'une collerette 22 constituée par un rabat périphérique perpendiculaire du capot 18, sur lequel agit par ailleurs l'organe de commande 7, ladit collerette s'étendant à l'extérieur de la paroi 19 du capot 18.

Selon l'invention l'élément de manoeuvre 9 est doté de rainures axiales 23 affectant son flasque 16, pour réception des pattes 21. Ledit flasque 16 présente sur l'une de ses faces en creux, pour coopération chacun avec une patte 21 associée, des logements 24 ouverts radialement en débouchant à la périphérie externe du flasque 16, chacun desdits logements 24 étant décalés circonférentiellement par rapport à sa rainure 23 associée.

Grâce à cela l'assemblage du capot 18 à l'élément de manoeuvre 9 s'effectue par introduction des pattes 21 dans les rainures axiales 23, jusqu'à ce que celles-ci débouchent sur la face concernée du flasque 16, puis par rotation pour venue en prise des pattes 21 avec les logements 24, l'organe élastique 17 étant comprimé lors de l'assemblage.

Ici lesdites pattes 21, formant des ergots radiaux, sont aptes, lors du montage, à coulisser dans trois rainures axiales 23, de section sensiblement identique au contour desdites pattes 21 et ménagées sur des génératrices g du retour 14′ de l'élément de manoeuvre 9 sur toute la longueur de celui-ci, pour déboucher sur le flasque 16 à l'opposé de son sens d'engagement. Ici les rainures 23 affectent le retour 14′ qu'en partie dans son épaisseur.

Bien entendu selon les applications, lorsque les ergots 21 sont plus longs, toute l'épaisseur du retour 14′ est concerné, lesdites rainures consistant alors en des fentes.

Le flasque 16 comporte, obtenus au cours d'une même opération de moulage, sur sa face extérieure (celle tournée à l'opposé de la bague 15 et du rebord 20), trois logements borgnes 24, ouverts radialement vers l'extérieur, décalés d'un angle α par rapport aux trois rainures 23 et de forme correspondante au jeu de montage près, à celle des pattes 21 qui s'y logent et s'y immobilisent, à la manière d'un montage "baïonnette" lors d'une rotation correspondante du capot 18 par rapport à l'élément de manoeuvre 9. Les logements 24 ont donc une forme rectangulaire d'orientation radiale en étant ouverts à la périphérie externe du flasque 16, une bande de matière existant entre les rainures 23 et les logements 24.

Le rappel et le maintien en position auto-centrée de l'élément d'attaque 8 dans le capot 18 est élastiquement obtenus par la charge de la rondelle élastique 17 disposée précisément entre la face interne du flasque 16 et le roulement 8 en appui rigide contre le rebord 20.

La face interne du rebord 14' limite le déplacement radial du roulement 13 monté avec jeu radial par rapport audit rebord 14', pour permettre à l'élément de manoeuvre de se déplacer radialement à l'encontre de la charge exercée par la rondelle 17, pour formation d'une butée de débrayage à auto-centrage maintenu, comme par exemple décrit dans le document US-A-4 144 957.

La rondelle 17 permet un maintien de l'auto-centrage ainsi qu'un maintien en prise des pattes 21 avec leur logement 24 correspondant, ladite rondelle 17 étant comprimée lors de l'assemblage du capot 18 à l'élément de manoeuvre 9.

On notera que les bords latéraux des logements 24 assurent un blocage en rotation du capot, tandis que le fond offre une bonne portée.

On appréciera que les logements 24 sont pratiqués dans la zone plus épaisse que présente le flasque 16 à sa périphérie externe pour appui de la rondelle 17, de sorte que le flasque 16 n'est pas affaibli outre mesure.

Pour débrayer, l'organe de commande 7 exerce une action sur la collerette 22 vers la droite de la figure 1, ce qui a pour effet de tirer sur les extrémités des doigts du diaphragme 5, pour annuler la charge qu'exerce ledit diaphragme 5 sur ledit plateau de pression 4 et libérer le disque 2.

Bien entendu, la butée de débrayage 6 peut être du type à auto-centrage non maintenu avec dans ce cas un montage sans jeu de la bague externe 15 par rapport au rebord 14', un jeu radial existant dans tous les cas entre le manchon 14 et la bague interne tournante 13 du roulement.

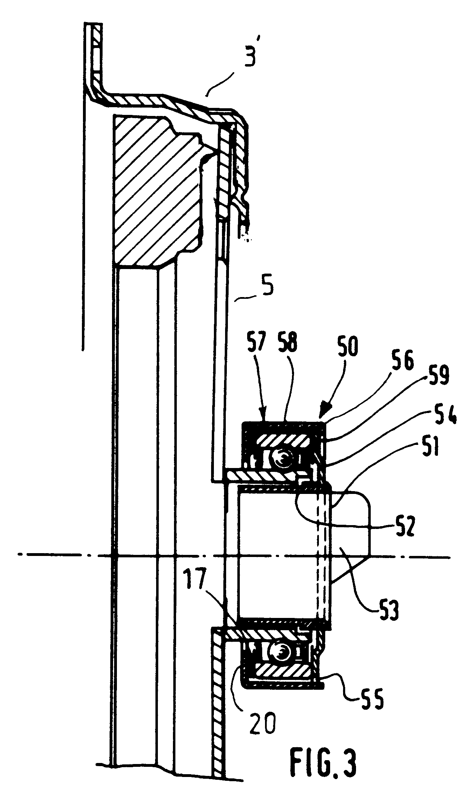

Selon le mode de réalisation de la figure 3, la butée de débrayage 50 est destinée à agir en poussée sur les extrémités des doigts du diaphragme 5 pour libérer le disque 2. Elle diffère essentiellement de la précédente en ce que, hormis le principe connu en soi de mise en oeuvre et d'action en poussée de la butée sur le diaphragme, l'organe de manoeuvre 51 comporte un manchon 52 muni de pattes de guidage 53 de l'organe de commande (non représenté) agissant ici en poussée sur la face extérieure du flasque transversal 54. Ici ce flasque 54, avantageusement métallique, est solidaire du manchon 52 (lui-même métallique ou en matière plastique), par exemple par sertissage ou surmoulage selon la nature du manchon 52 et comporte à sa périphérie des encoches 55 aptes à permettre le passage, lors du montage, de pattes 56 du capot 57, de section correspondante, obtenues par pliage de parties prévues à cet effet, perpendiculairement à la paroi latérale annulaire 58 dudit capot 57. Comme précédemment décrit, le verrouillage s'effectue alors par rotation du capot 57 par rapport au flasque 54 du manchon 52, jusqu'à ce que les pattes 56 dudit capot 57 viennent se loger dans des logements 59 décalés angulairement et obtenus ici par des parties embouties du flasque 54 définissant un creux ouvert radialement.

Ici ces logements 59 sont ouverts radialement en débouchant à la périphérie externe du flasque 54 et les encoches 55 constituent les rainures selon la présente invention, le flasque 54 étant dépourvu de retour axial à sa périphérie externe.

Les logements 59 forment des zones d'appui décalées axialement pour la bague externe du roulement à billes, la rondelle élastique 17 étant interposée entre l'épaulement 20 du capot et la bague externe du roulement à billes. La rondelle 17 est donc contrebutée par le capot et la bague 15 en butée sur le flasque 16.

Grâce à l'invention et à l'emboutissage ces zones d'appui sont avantageusement rigidifiées.

Bien entendu le flasque 54 pourra aussi être obtenu de matière avec le manchon 52.

Dans tous les cas le capot 18,57 vient coiffer le flasque 16,54 et la distance axiale, entre l'épaulement du capot et les pattes 21,56 est assez grande, de sorte que la charge exercée par l'organe élastique 17 peut être précise.

En outre, la dimension des logements 59,24 est avantageusement calculée pour que les pattes 21,56 ne fassent pas saillie par rapport à la face concernée du flasque 16 après assemblage.

Bien entendu, dans tous les exemples de réalisation, l'organe élastique peut consister en une rondelle Belleville ou analogue, et l'organe de commande 7 en un piston d'une commande hydraulique.

Les pattes 21,56 peuvent être légèrement inclinées, en direction du flasque 16 et la disposition de la figure 11 du document US-A-4 529 075 avec des pattes moins larges que les ouvertures du capot dans lesquelles elles sont pratiquées, étant applicables. Le nombre de pattes dépend des applications et peut être supérieur à trois.

L'appui de l'élément d'attaque 8 sur le flasque 16 et l'épaulement 20 peut se faire indirectement par l'intermédiaire d'une rondelle.

Bien entendu, la butée "poussée" peut être pourvu d'un flasque à rebord axial annulaire.

## Revendications

1. Butée de débrayage, notamment pour véhicule automobile, du type comportant un élément d'attaque (8), par lequel elle est destinée à agir sur le dispositif débrayeur d'un embrayage, un élément de manoeuvre (9), doté d'un flasque transversal (16,54), par lequel elle est adaptée à être déplacée par un organe de commande (7), un capot (18,57), pour attelage axial de l'élément d'attaque (8) à l'élément de manoeuvre (9), comprenant une paroi latérale annulaire (19,58) portant un épaulement d'appui (20) pour l'élément d'attaque (8), et des moyens d'assemblage, pour assujettir le capot (18,57) à l'élément de manoeuvre (9), comprenant, d'une part, des pattes (21,56), issues de la paroi latérale (19,58) du capot (18,57) et faisant saillie vers l'intérieur de ladite paroi (19,58) et, d'autre part, un organe élastique à action axiale (17), déformable lors de l'assemblage du capot (18) à l'élément de manoeuvre (9), ledit organe élastique (17) prenant appui sur l'élément d'attaque (8) en étant confiné axialement, ainsi qu'une partie de l'élément d'attaque (8), entre le flasque (16,54) de l'élément de manoeuvre (9) et l'épaulement d'appui (20) du capot (18,57), caractérisée en ce que l'élément de manoeuvre (9) est doté de rainures axiales (23,55) affectant son flasque (16,54) pour réception desdites pattes (21,56), et en ce que ledit flasque (16,54) présente sur l'une de ses faces en creux, pour coopération chacun avec une patte (21,56) associée, des logements (24,59) ouverts radialement en débouchant à la périphérie externe du flasque (16,54), chacun desdits logements (24,59) étant décalé circonférentiellement par rapport à sa rainure associée (23,55), de sorte que l'assemblage du capot (18,57) à l'élément de manoeuvre (9) s'effectue par introduction les pattes (21,56) dans les rainures axiales (23,55), jusqu'à ce que celles-ci débouchent sur la face concernée dudit flasque, puis par rotation pour venue en prise desdites pattes (21,56) avec lesdits logements (24,59), l'organe élastique (17) étant comprimé lors de l'assemblage.

2. Butée de débrayage selon la revendication 1, caractérisée en ce que la dimension des logements (59,24) est telle que les pattes (21,56) du capot (18,57) ne fassent pas saillie par rapport à la face concernée du flasque (16,54) de l'élément de manoeuvre (9) après assemblage.

3. Butée de débrayage selon la revendication 1 ou 2, caractérisée en ce que les pattes (21,56) s'étendent radialement et en ce que les logements (24,59) sont sensiblement identiques au contour desdites pattes (21,56).

4. Butée de débrayage selon l'une quelconque des revendications 1 à 3, caractérisée en ce que lesdites pattes (21) forment des ergots radiaux de contour rectangulaire obtenus par découpe de trois côtés (21a,21b,21c) et par pliage autour d'une ligne correspondant au quatrième côté fictif (21d) autour d'un angle du rectangle selon un angle sensiblement perpendiculaire de manière à ce que lesdites pattes soient dirigées vers l'intérieur du capot (18).

5. Butée de débrayage selon la revendication 3, caractérisée en ce que la ligne de pliage de la patte (21) du capot (18) est située dans le plan d'une collerette (22), sur laquelle agit l'organe de commande (7), constituée par un rabat périphérique perpendiculaire du capot (18) s'étendant à l'extérieur de la paroi latérale (18) du capot (18).

6. Butée de débrayage selon l'une quelconque des revendications 1 à 5, dans laquelle l'élément de manoeuvre est en matière plastique ainsi que son flasque (16) qui présente à sa périphérie externe un retour axial annulaire (14'), caractérisée en ce que les rainures (23) affectent ledit retour (14'), et en ce que les logements (24) consistent en des logements borgnes venus de moulage avec l'élément de manoeuvre (9), une bande de matière existant entre les rainures (23) et les logements (24).

7. Butée de débrayage selon la revendication 6, caractérisée en ce que les logements (24) sont pratiqués dans la zone la plus épaisse que présente le flasque (16) de l'élément de manoeuvre (9) à sa périphérie externe pour appui dudit organe élastique (17).

8. Butée de débrayage selon l'une quelconque des revendications 1 à 3, dans laquelle le flasque (54) de l'élément de manoeuvre (9) est métallique, caractérisée en ce que les rainures axiales consistent en des encoches (55) pratiquées à la périphérie externe du flasque (54), et en ce que les logements (59) sont obtenus par emboutissage.

9. Butée de débrayage selon la revendication 8, dans laquelle l'élément d'attaque (8) est sous forme d'un roulement à billes, caractérisée en ce que les logements (59) forment des zones d'appui décalées axialement pour la bague externe du roulement à billes.

## Patentansprüche

1. Kupplungsausrücklager, insbesondere für ein Kraftfahrzeug, enthaltend ein Treibelement (8), wodurch es auf die Ausrückvorrichtung einer Kupplung einwirken soll, ein Betätigungselement (9), versehen mit einem Querflansch (16, 54), wodurch es mittels eines Bedienungsorgans (7) verschoben werden kann, eine Kappe (18, 57) zur axialen Ankopplung des Treibelements (8) an das Betätigungselement (9), einschließlich einer ringförmigen Seitenwand (19, 58), die einen Auflagebund (20) für das Treibelement (8) trägt, und mit Montagemitteln zur Befestigung der Kappe (18, 57) am Betätigungselement (9), enthaltend einerseits Klammern (21, 56), die von der Seitenwand (19, 58) der Kappe (18, 57) ausgehen und in das Innere der genannten Wand (19, 58) vorspringen, und andererseits ein axial wirksames elastisches Organ (17), welches bei der Anbringung der Kappe (18) am Betätigungselement (9) verformbar ist, wobei das genannte elastische Organ (17) auf dem Treibelement (8) mit axialer Beschränkung zur Auflage kommt, sowie einem Teil des Treibelements (8) zwischen dem Flansch (16, 54) des Betätigungselements (9) und dem Auflagebund (20) der Kappe (18, 57), **dadurch gekennzeichnet,** daß das Betätigungselement (9) mit axialen Nuten (23, 55) versehen ist, die den Flansch (16, 54) berühren und zur Aufnahme der genannten Klammern (21, 56) dienen, und daß der genannte Flansch (16, 54) auf einer seiner Hohlflächen zum Zusammenwirken mit jeweils einer zugehörigen Klammer (21, 56) radial offene Aufnahmen (24, 59) aufweist, die an der Außenperipherie des Flanschs (16, 54) münden, wobei jede der genannten Aufnahmen (24, 59) am Kreisumfang im Verhältnis zur zugehörigen Nut (23, 55) versetzt ist, so daß die Anbringung der Kappe (18, 57) am Betätigungselement (9) durch Einführung der Klammern (21, 56) in die axialen Nuten (23, 55) erfolgt, bis diese an der betreffenden Fläche des genannten Flanschs eimünden, sowie durch anschließendes Drehen, um die genannten Klammern (21, 56) mit den genannten Aufnahmen (24, 59) in Eingriff zu bringen, wobei das elastische Organ (17) bei der Anbringung zusammengedrückt wird.

2. Kupplungsausrücklager nach Anspruch 1, **dadurch gekennzeichnet**, daß die bemessung der Aufnahmen (59, 24) so beschaffen ist, daß die Klammern (21, 56) der Kappe (18, 57) nach dem Zusammenbau im Verhältnis zur betreffenden Fläche des Flanschs (16, 54) des Betätigungselements (9) nicht vorspringen.

3. Kupplungsausrücklager nach Anspruch 1 oder 2, **dadurch gekennzeichnet**, daß sich die Klammern (21, 56) radial erstrecken und daß die Aufnahmen (24, 59) im wesentlichen identisch mit der Kontur der genannten Klammern (21, 56) sind.

4. Kupplungsausrücklager nach einem der Ansprüche 1 bis 3, **dadurch gekennzeichnet**, daß die genannten Klammern (21) radiale Zapfen von rechteckiger Kontur bilden, die durch das Ausschneiden von drei Seiten (21a, 21b, 21c) und durch Falzung um eine Linie hergestellt werden, die der vierten fiktiven Seite (21d) um einen Winkel des Rechtecks entspricht, und zwar in einem Winkel, der im wesentlichen lotrecht dazu verläuft, so daß die genannten Klammern dem Innern der Kappe (18) zugewandt sind.

5. Kupplungsausrücklager nach Anspruch 3, **dadurch gekennzeichnet**, daß die Falzlinie der Klammer (21) der Kappe (18) in der Ebene eines Kragens (22) liegt, worauf das Bedienungsorgan (7) einwirkt, der aus einem lotrechten Umschlag am Umfang der Kappe (18) besteht, der außen an der Seitenwand (18) der Kappe (18) verläuft.

6. Kupplungsausrücklager nach einem der Ansprüche 1 bis 5, wobei das Betätigungselement aus Kunststoff besteht und der Flansch (16) an der Außenperipherie einen ringförmigen axialen Rücksprung (14') aufweist, **dadurch gekennzeichnet**, daß die Nuten (23) auf den genannten Rücksprung (14') übergreifen und daß die Aufnahmen (24) aus Blindlöchern bestehen, die aus einem Stück mit dem Betätigungselement (9) gepreßt sind, wobei zwischen den Nuten (23) und den Aufnahmen (24) ein Streifen aus dem gleichen Material vorhanden ist.

7. Kupplungsausrücklager nach Anspruch 6, **dadurch gekennzeichnet**, daß die Aufnahmen (24) im dicksten Bereich angebracht sind, den der Flansch (16) des Betätigungselements (9) an der Außenperipherie für die Auflage des genannten elastischen Organs (16) aufweist.

8. Kupplungsausrücklager nach einem der Ansprüche 1 bis 3, wobei der Flansch (54) des Betätigungselements (9) aus Metall besteht, **dadurch gekennzeichnet**, daß die axialen Nuten aus Einschnitten (55) bestehen, die an der Außenperipherie des Flanschs (54) angebracht sind, und daß die Aufnahmen (59) im Tiefziehverfahren hergestellt werden.

9. Kupplungsausrücklager nach Anspruch 8, wobei das Treibelement (8) die Form eines Kugellagers hat, **dadurch gekennzeichnet**, daß die Aufnahmen (59) axial versetzte Auflagebereiche für den Außenring des Kugellagers bilden.

## Claims

1. A clutch release bearing, especially for a motor vehicle, of the kind comprising a working element (8) by which it is adapted to act on the actuating means of a clutch, and a manoeuvring element (9) having a transverse radial portion (16, 54), by which it is adapted to be displaced by a control member (7), a shroud (18, 57) for axially attaching the working element (8) to the manoeuvring element (9), including an annular lateral wall (19, 58) defining a thrust shoulder for engagement of the working element (8) thereon, and assembly means for attaching the shroud (18, 57) to the manoeuvring element (9) and comprising, firstly, tabs (21, 56) extending from the lateral wall (19, 58) of the shroud (18, 57) and projecting towards the interior of the said wall (19, 58), and, secondly, an axially acting resilient member (17), deformable during assembly of the shroud (18) to the manoeuvring element (9), with the said resilient member (17) bearing on the working element (8) while being confined in the axial direction, together with a portion of the working element (8), between the radial portion (16, 54) of the manoeuvring element (9) and the thrust shoulder (20) of the shroud (18, 57), characterised in that the manoeuvring element (9) is provided with axially extending grooves (23, 55) in its radial portion (16, 54) so as to receive the said tabs (21, 56), and in that the said radial portion (16, 54) has a plurality of recesses (24, 59) on one of its hollow faces, for cooperation of each said recess with an associated said tab (21, 56), the said recesses being open radially in the outer periphery of the radial portion (16, 54), with each of the said recesses (24, 59) being circumferentially offset with respect to its associated groove (23, 55), in such a way that assembly of the shroud (18, 57) with the manoeuvring element (9) is effected by introducing the tabs (21, 56) into the axial grooves (23, 55) until the latter emerge on the appropriate face of the said radial portion for subsequent engagement, by rotation of the said tabs (21, 56), in the said recesses (24, 59), the resilient member (17) being compressed during the assembly.

2. A clutch release bearing according to Claim 1, characterised in that the dimensions of the recesses (59, 24) is such that the tabs (21, 56) of the shroud (18, 57) will not project from the corresponding face of the radial portion (16, 54) of the manoeuvring element (9) after assembly.

3. A clutch release bearing according to Claim 1 or Claim 2, characterised in that the tabs (21, 56) extend radially, and in that the recesses (24, 59) are substantially identical to the contour of the said tabs (21, 56).

4. A clutch release bearing according to any one of Claims 1 to 3, characterised in that the said tabs (21) define radial lugs of rectangular shape, obtained by severing on three sides (21a, 21b, 21c) and by bending the rectangle about a line corresponding to the imaginary fourth side (21d) through an angle such as to move it substantially perpendicularly, in such a way that the said lugs are directed inwardly of the shroud (18).

5. A clutch release bearing according to Claim 3, characterised in that the bending line of the lug (21) of the shroud (18) lies in the plane of a flange portion (22), on which the actuating member (7) acts and which comprises a peripheral, perpendicular flange of the shroud (18) extending outwardly from the lateral wall (18) of the shroud (18).

6. A clutch release bearing according to any one of Claims 1 to 5, in which the manoeuvring element is of a plastics material, as is its radial portion (16), which has at its outer periphery an annular, axial flange portion (14'), characterised in that the grooves (23) are formed in the said flange portion (14'), and in that the recesses (24) comprise blind recesses formed by moulding in the manoeuvring element (9), with an integral land existing between the grooves (23) and the recesses (24).

7. A clutch release bearing according to Claim 6, characterised in that the recesses (24) are formed in the thickest zone of the radial portion (16) of the manoeuvring element (9) at its outer periphery, for engagement of the said resilient member (17) thereon.

8. A clutch release bearing according to any one of Claims 1 to 3, wherein the radial portion (54) of the manoeuvring element (9) is metallic, characterised in that the axial grooves are in the form of slots (55) formed in the outer periphery of the radial portion (54), and in that the recesses (59) are formed by pressing.

9. A clutch release bearing according to Claim 8, in which the working element (8) is in the form of a ball bearing, characterised in that the recesses (59) define axially offset zones of engagement for the outer ring of the ball bearing.

EP 0 360 650 B1

FIG. 1

FIG.2

FIG.3